# EUROPÄISCHE PATENTSCHRIFT

(11) **EP 2 616 839 B1**
(45) Veröffentlichungstag und Bekanntmachung des Hinweises auf die Patenterteilung: **22.10.2014**
(21) Anmeldenummer: 11739026.0
(22) Anmeldetag: 18.07.2011
(51) Int. Cl.: G01S 13/93, H01Q 3/30, H01Q 21/06, G01S 13/88, H01Q 1/32

(54) **RADARSENSOR FÜR KRAFTFAHRZEUGE, INSBESONDERE RCA-SENSOR**
RADAR SENSOR FOR MOTOR VEHICLES, ESPECIALLY RCA SENSOR
CAPTEUR RADAR POUR VÉHICULES À MOTEUR, NOTAMMENT CAPTEUR RCA

(30) Priorität: 14.09.2010 DE 102010040696
(43) Veröffentlichungstag der Anmeldung: 24.07.2013
(73) Patentinhaber: Robert Bosch GmbH, 70442 Stuttgart (DE)
(72) Erfinder: BINZER, Thomas, 70565 Stuttgart (DE)
(86) Internationale Anmeldenummer: PCT/EP2011/062192
(87) Internationale Veröffentlichungsnummer: WO 2012/034735

(56) Entgegenhaltungen:
- EP-A1- 1 679 525
- WO-A1-2005/073753

## Beschreibung

### Stand der Technik

Die Erfindung betrifft einen Radarsensor für Kraftfahrzeuge, mit einer Sendeantenne in der Form einer planaren Gruppenantenne mit mehreren nebeneinander angeordneten Antennenelementen, und mit einem Speisenetzwerk zur Zufuhr von Mikrowellenleistung zu den Antennenelementen.

Antennen von Radarsensoren, die für den Einsatz in Kraftfahrzeugen vorgesehen sind, werden häufig als Patchantennen auf einem HF-Substrat ausgeführt. Das erlaubt einen kostengünstigen Aufbau des Radarsensors. Durch Einsatz von Gruppenantennen lässt sich die gewünschte Richtcharakteristik des Radarsensors im Azimut und/oder in der Elevation erreichen, ohne dass eine Radarlinse benötigt wird. Häufig werden getrennte Antennen für die Abstrahlung des Radarsignals und für den Empfang des reflektierten Signals verwendet. Die gewünschte Richtcharakteristik der Sendeantenne im Azimut lässt sich dadurch erreichen, dass den mehreren nebeneinander auf dem Substrat angeordneten Antennenelementen die Mikrowellenleistung phasengleich zugeführt wird. Durch Interferenz entsteht dann eine Radarkeule, deren Hauptabstrahlrichtung rechwinklig zur Ebene des Substrats orientiert ist und die einen Azimutwinkelbereich von etwa -45° bis etwa +45° abdeckt. Auf der Empfangsseite werden ebenfalls mehrere nebeneinander angeordnete Antennenelemente oder Patches verwendet, die jedoch zu verschiedenen Empfangskanälen gehören, so dass anhand der Phasenunterschiede zwischen den von den verschiedenen Antennenelementen empfangenen Signalen auf den Azimutwinkel des Objekts geschlossen werden kann.

Insbesondere befasst sich die Erfindung mit einer Radarsensorik für Kraftfahrzeuge, die eine Überwachung des Querverkehrs ermöglicht, beispielsweise in einem RCA-System (Rear Cross Alert), das den Fahrer beim Zurücksetzen aus einer Parklücke oder Einfahrt unterstützt, indem es vor Fahrzeugen warnt, die sich auf einer rechtwink-lig zur Fahrzeug-Längsrichtung verlaufenden Fahrbahn oder Parkplatzgasse annähern. In diesem Fall muss die Radarsensorik in der Lage sein, Objekte zu orten, die in Längsrichtung des Fahrzeugs nur einen geringen Abstand zum einen Fahrzeug haben, sich jedoch bei großen Azimutwinkeln rechts oder links von dem eigenen Fahrzeug befinden.

### Offenbarung der Erfindung

Aufgabe der Erfindung ist es, eine einfach aufgebaute und kostengünstige Radarsensorik zu schaffen, die es erlaubt, Objekte unter großen Azimutwinkeln beiderseits des eigenen Fahrzeugs zu orten.

Diese Aufgabe wird erfindungsgemäß mit einem Radarsensor der eingangs genannten Art gelöst, bei dem das Speisenetzwerk dazu ausgebildet ist, jedem Paar von einander unmittelbar benachbarten Antennenelementen die Mikrowellenleistung mit entgegengesetzter Phase zuzuführen.

Durch Interferenz zwischen den von den verschiedenen Antennenelementen abgestrahlten Radarwellen kommt es dann zur Ausbildung von ausgeprägten Nebenkeulen, so dass ein großer Teil der Mikrowellenleistung unter großen Azimutwinkeln abgestrahlt wird, also beispielsweise in Winkelbereiche von -90° bis 45° und von +45° bis +90°. Auf diese Weise ist es möglich, den Querverkehr, der sich von links oder rechts dem eigenen Fahrzeug annähert, mit einem einzigen Radarsensor zu erfassen.

Vorteilhafte Ausgestaltungen und Weiterbildungen der Erfindung sind in den Unteransprüchen angegeben.

In einer bevorzugten Ausführungsform ist das Speisenetzwerk so ausgebildet, dass auch die Amplitude der emittierten Mikrowellen von Antennenelement zu Antennenelement variiert, beispielsweise von einem Ende der Reihe der Antennenelemente zum entgegengesetzten Ende hin abnimmt. Dadurch wird die Winkelverteilung der emittierten Radarstrahlung vergleichmäßigt, so dass Ortungslücken zwischen der Hauptkeule und den Nebenkeulen weitgehend geschlossen werden.

Gemäß einer Weiterbildung der Erfindung ist das Speisenetzwerk derart umschaltbar, dass die Phase jedes zweiten Antennenelements zwischen 0° und 180° umgeschaltet werden kann. Wenn alle Antennen gleichphasig angesteuert werden, erhält man einen herkömmlichen Radarsensor, der die Ortung von Objekten im Winkelbereich von -45° bis +45° mit großer relativ großer Ortungstiefe erlaubt. Durch Umschaltung der Phase für jedes zweite Antennenelement erhält man eine Richtcharakteristik, die für die Ortung des Querverkehrs optimiert ist.

Im folgenden werden Ausführungsbeispiele der Erfindung anhand der Zeichnung näher erläutert.

Es zeigen:
- Fig. 1: eine schematische Darstellung mehrerer in einer horizontalen Reihe auf einem nicht gezeigten Substrat angeordneter Antennenelemente, mit Angabe der Phasen- und Amplitudenbelegung der einzelnen Antennenelemente;
- Fig. 2: ein Antennendiagramm für die Antennenanordnung und die Phasen- und Amplitudenbelegung gemäß Fig. 1;
- Fig. 3: eine Prinzipskizze eines Radarsensors gemäß einer Ausführungsform der Erfindung;
- Fig. 4: eine Prinzipskizze eines Radarsensors gemäß einem abgewandelten Ausführungsbeispiel; und
- Fig. 5: ein Ortungsdiagramm eines RCA-Radarsensors gemäß der Erfindung.

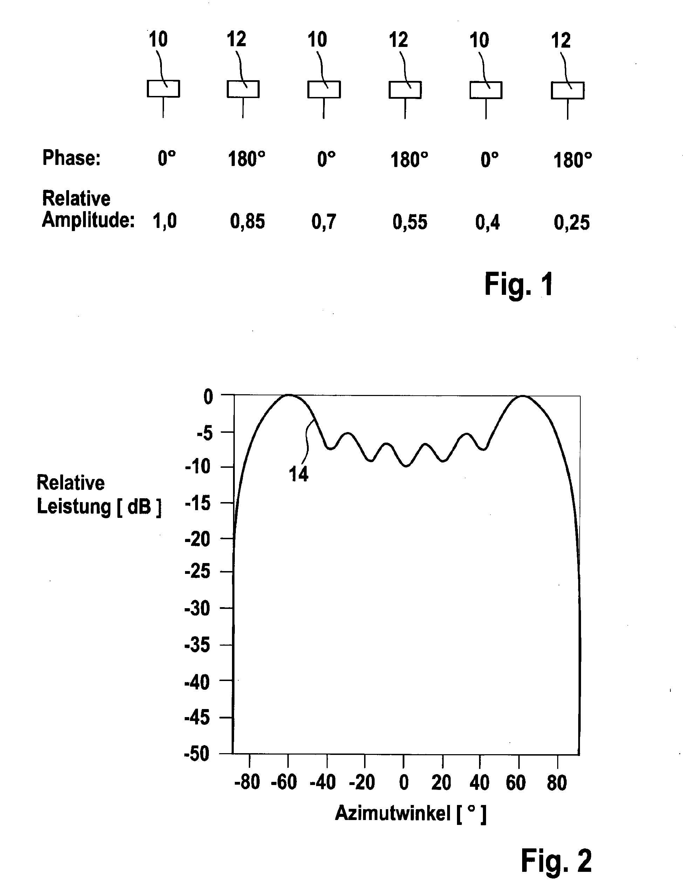

In Fig. 1 sind sechs Antennenelemente 10, 12 gezeigt, die in einer waagerechten Reihe auf einem nicht gezeigten HF-Substrat angeordnet sind. Die Antennenelemente sind hier als einzelne Patches dargestellt. Die Abstände zwischen den einzelnen Patches brauchen nicht gleichförmig zu sein.

Über ein Speisenetzwerk, das später näher beschrieben werden wird, erhalten die Antennenelemente 10, 12 ein Mikrowellensignal, das dann als Radarstrahlung abgestrahlt werden soll.

Die Phasen- und Amplitudenbelegung der Antennenelemente 10, 12 ist ebenfalls in Fig. 1 angegeben. Die Antennenelemente 10, also das erste, dritte und fünfte Antennenelement in der Reihe, erhalten gleichphasige Signale (0°). Die Phasen der dazwischen liegenden Antennenelemente 12 sind ebenfalls untereinander gleichphasig (180°), jedoch den Phasen der Antennenelemente 10 entgegengesetzt. Die Amplitude der Signale nimmt über die Reihe der Antennenelemente von links nach rechts linear ab. Wenn die Amplitude des äußersten linken Antennenelements 10 auf 1,0 normiert wird, so nimmt in diesem Beispiel die Amplitude von Antennenelement zu Antennenelement jeweils um 0,15 ab.

Fig. 2 zeigt das Antennendiagramm, das aus der in Fig. 1 gezeigten Phasen- und Amplitudenbelegung resultiert. Die Kurve 14 in Fig. 2 gibt die relative Leistung der von den Antennenelementen 10, 12 emittierten Radarstrahlung als Funktion des Azimutwinkels an. Durch Interferenz zwischen den von den einzelnen Antennenelementen 10, 12 emittierten Strahlungsanteilen kommt es zu ausgeprägten Maxima bei Azimutwinkeln von ± 70°. Bei kleineren Azimutwinkeln gibt es weitere Nebenmaxima. Bei dem Azimutwinkel von 0° gibt es anstelle eines Hauptmaximums ein flaches Minimum. Durch die ungleichmäßige Amplitudenbelegung gemäß Fig. 1 wird erreicht, dass die Minima im Antennendiagramm relativ schwach ausgeprägt sind, so dass sich die Leistung annähernd gleichmäßig über den gesamten Azimutwinkelbereich von -90° bis +90° verteilt.

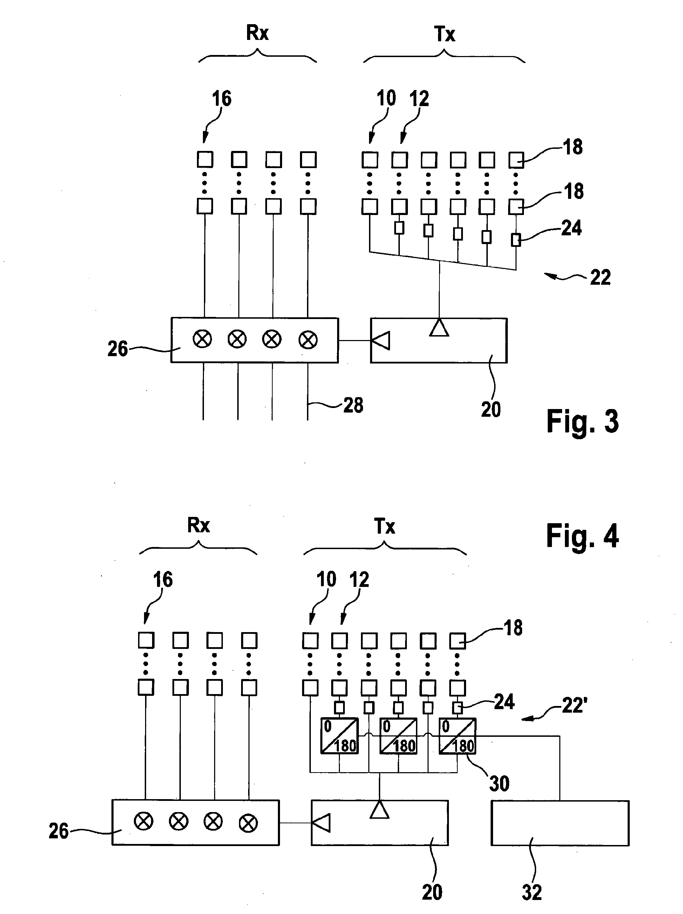

Fig. 3 zeigt ein detailliertes Schaltbild der wesentlichen Komponenten eines Radarsensors mit einer Sendeantennenanordnung gemäß Fig. 1.

Die sechs Antennenelemente 10, 12 bilden zusammen eine Sendeantenne Tx. In diesem Beispiel sind vier weitere Antennenelemente 16 sind in gleichmäßigen lateralen Abständen angeordnet und bilden zusammen eine Empfangsantenne Rx. Die Antennenelemente 10, 12 und 16 bestehen jeweils aus einer Spalte von Patches 18, in die das Mikrowellensignal phasengleich eingekoppelt wird. Durch Interferenz erhält man daher in der Elevation eine Richtcharakteristik mit einem ausgeprägten Hauptmaximum bei dem Elevationswinkel 0° (rechtwinklig zum Substrat). Diese Hauptmaximum erstreckt sich über einen Winkelbereich von etwa -45° bis etwa +45°. Nebenkeulen sind dagegen nur schwach ausgebildet.

Im Azimut entspricht die Richtcharakteristik der Sendeantenne Tx dagegen dem Antennendiagramm nach Fig. 2, so dass man insgesamt, ohne Verwendung einer Radarlinse, einen in der Vertikalen gebündelten, in der Horizontalen jedoch weit aufgefächerten Radarstrahl erhält.

Die Mikrowellenleistung für die Sendeantenne Tx wird von einem Oszillator 20 erzeugt und den einzelnen Antennenelementen 10, 12 über ein semiparalleles Speisenetzwerk 22 zugeführt. Dieses Netzwerk verzweigt sich vom Ausgang des Oszillators 20 in parallele Zweige, die jeweils zu einem der Antennenelemente 10, 12 führen. Die Anordnung der Leiterbahnen ist dabei so gewählt, dass sich die Signalwege vom Ausgang des Oszillators 20 zum Eingang des jeweiligen Antennenelements jeweils um eine halbe Wellenlänge unterscheiden. Auf diese Weise wird die in Fig. 1 gezeigte Phasenbelegung erreicht. Zur Einstellung der Amplitudenbelegung enthält jeder Zweig des Speisenetzwerkes 22 (mit Ausnahme des äußersten linken Zweiges) einen sogenannten Impedanztransformator 24, mit dem die an das betreffende Antennenelement weitergeleitete Leistung um das gewünschte Maß angepasst wird.

Die vier Antennenelemente 16 der Empfangsantenne Rx sind mit einem Vierkanalmischer 26 verbunden, der das von jedem einzelnen Antennenelement 16 empfangene Signal mit dem vom Oszillator 20 gelieferten Sendesignal mischt. An den Ausgängen 28 des Vierkanalmischers 26 erhält man als Mischprodukte Zwischenfrequenzsignale, deren Frequenz dem Frequenzunterschied zwischen der von der Sendeantenne Tx emittierten Strahlung und der zur gleichen Zeit von dem betreffenden Antennenelement 16 der Empfangsantenne Rx empfangenen Strahlung entspricht. Da die Frequenz des Oszillators 20 rampenförmig moduliert wird (FMCW-Radar; Frequency Modulated Continuous Wave) ist die Frequenz der Zwischenfrequenzsignale sowohl von der Signallaufzeit und damit vom Abstand des georteten Objekts als auch von der Dopplerverschiebung und damit von der Relativgeschwindigkeit des Objekts abhängig. Die Phasenunterschiede zwischen den Zwischenfrequenzsignalen repräsentieren entsprechende Phasenunterschiede zwischen den Radarechos, die von den verschiedenen Antennenelementen 16 empfangen werden. Diese Phasenunterschiede sind von der unterschiedlichen Länge der Signalwege zu den nebeneinander angeordneten Antennenelementen 16 abhängig und geben daher Aufschluss über den Azimutwinkel des georteten Objekts.

Die Auswertung der Zwischenfrequenzsignale ist als solche bekannt und wird hier nicht näher beschrieben.

Die Antennenelemente 10, 12 der Sendeantenne und die Antennenelemente 16 der Empfangsantenne sowie das Speisenetzwerk 22 können in Mikrostreifentechnik auf einem gemeinsamen Substrat gebildet sein, das auch den Vierkanalmischer 26 und den Oszillator 20 sowie ggf. weitere Komponenten des Radarsensors aufnimmt.

Fig. 4 zeigt einen Radarsensor gemäß einem abgewandelten Ausführungsbeispiel. Anstelle des Speisenetzwerkes 22 aus Fig. 3 ist hier ein Speisenetzwerk 22' vorgesehen, bei dem jedem zweiten Zweig, also den Zweigen, die zu einem der Antennenelemente 12 führen, ein Phasenumschalter 30 angeordnet ist. Je nach Schaltzustand wird in dem Phasenumschalter die Phase des vom Oszillator 20 zugeführten Signals um 180° gedreht oder unverändert gelassen. Die drei Phasenumschalter 30 werden von einer gemeinsamen Steuereinheit 32 angesteuert.

In dem Betriebsmodus, in dem die Phase gedreht wird, entspricht die Richtcharakteristik dem Antennendiagramm nach Fig. 2. In dem Betriebsmodus, in dem die Phase unverändert bleibt, erhält man dagegen auch im Azimut eine ähnlich gebündelte Abstrahlung wie in der Elevation, so dass Objekte im Winkelbereich von -45° bis +45° schon bei größerer Entfernung geortet werden können. Mit Hilfe der Steuereinheit 32 lässt sich somit die Betriebsweise des Radarsensors der jeweiligen Verkehrssituation anpassen.

Die Impedanztransformatoren 24 führen bei dem Radarsensor nach Fig. 4 zu einer leichten Abschwächung der Hauptkeule in dem Betriebsmodus ohne Phasenumkehr. Diese kann jedoch in der Regel in Kauf genommen werden. Wahlweise ist es möglich, die Impedanztransformatoren 24 fortzulassen oder so auszulegen, dass die Leistungsabschwächung geringer ausfällt. Im Betriebsmodus mit gebündelter Richtcharakteristik erreicht man dann eine größere Ortungstiefe, doch müssen in der Betriebsart mit weit aufgefächerter Charakteristik tiefere Minima im Antennendiagramm in Kauf genommen werden.

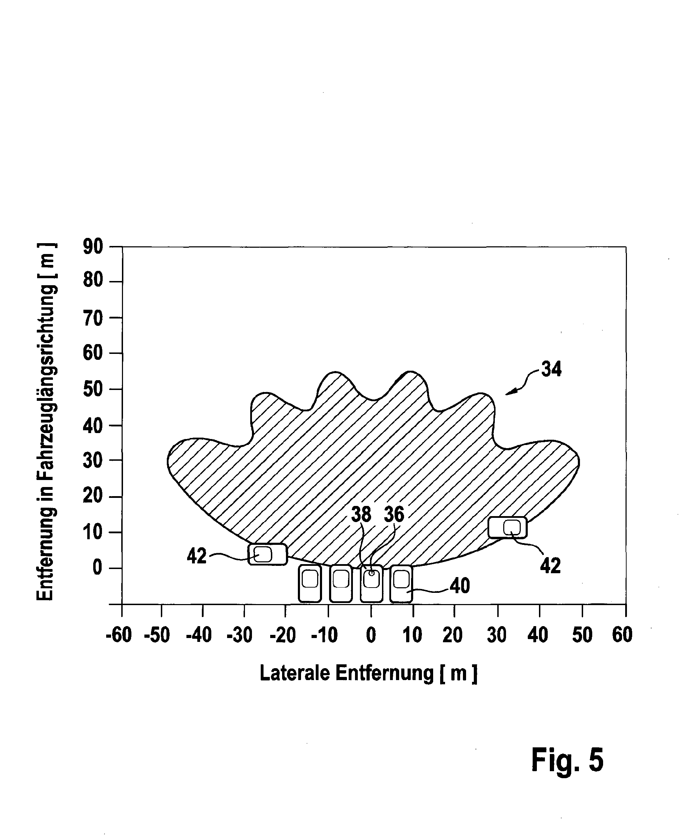

In Fig. 5 ist ein Ortungsfeld 34 eines erfindungsgemäßen Radarsensors 36 gezeigt, beispielsweise des Radarsensors nach Fig. 3. Der Radarsensor 36 ist so im Heck eines Kraftfahrzeugs 38 eingebaut, dass der Azimutwinkel 0° der Rückwärts-Fahrtrichtung des Fahrzeugs entspricht.

Im gezeigten Beispiel ist der Radarsensor 36 Teil eines RCA-Systems, das den Fahrer beim Zurücksetzen aus einer Parklücke oder Einfahrt vor Querverkehr warnt. In Fig. 5 sind weitere Fahrzeuge 40 gezeigt, die die Parklücke für das Fahrzeug 38 bilden. Der Querverkehr wird durch zwei weitere Fahrzeuge 42 symbolisiert. Obgleich diese Fahrzeuge 42 große seitliche Abstände zu dem Fahrzeug 38 aufweisen, liegen sich noch im Ortungsfeld 34, so dass der Fahrer des Fahrzeugs 38 rechtzeitig vor der Annäherung der Fahrzeuge 42 gewarnt werden kann.

## Patentansprüche

1. Radarsensor für Kraftfahrzeuge (38), mit einer Sendeantenne (Tx) in der Form einer planaren Gruppenantenne mit mehreren nebeneinander angeordneten Antennenelementen (10, 12), und mit einem Speisenetzwerk (22; 22') zur Zufuhr von Mikrowellenleistung zu den Antennenelementen, **dadurch gekennzeichnet, dass** das Speisenetzwerk (22; 22') dazu ausgebildet ist, jedem Paar von einander unmittelbar benachbarten Antennenelementen (10, 12) die Mikrowellenleistung mit entgegengesetzter Phase zuzuführen.

2. Radarsensor nach Anspruch 1, bei dem das Speisenetzwerk (22; 22') weiterhin dazu ausgebildet ist. den Antennenelementen (10, 12) die Mikrowellenleistung mit unterschiedlicher Amplitude zuzuführen.

3. Radarsensor nach Anspruch 2, bei dem die Amplitude längs der Reihe der Antennenelemente (10, 12) von einem Ende zum anderen schrittweise abnimmt, vorzugsweise in gleichen Intervallen.

4. Radarsensor nach einem der vorstehenden Ansprüche, bei dem das Speisenetzwerk (22') für jedes zweite Antennenelement (12) einen Phasenumschalter (30) enthält, der je nach Schaltzustand die Phase unverändert lässt oder um 180° dreht.

5. Fahrerassistenzsystem für Kraftfahrzeuge, mit einer Radarsensorik (36) zur Ortung von Objekten (42), die sich in geringem Längsabstand, jedoch in großen seitlichen Abständen zu dem eigenen Fahrzeug (38) befinden, **dadurch gekennzeichnet, dass** die Radarsensorik durch einen einzigen Radarsensor (36) nach einem der Ansprüche 1 bis 4 gebildet wird.

## Claims

1. Radar sensor for motor vehicles (38), having a transmitting antenna (Tx) in the form of a planar antenna array with a plurality of juxtaposed antenna elements (10, 12), and having a feed network (22; 22') for feeding microwave power to the antenna elements, **characterized in that** the feed network (22; 22') is designed for the purpose of feeding the microwave power in phase opposition to each pair of immediately juxtaposed antenna elements (10, 12).

2. Radar sensor according to Claim 1, in which the feed network (22; 22') is, furthermore, designed for the purpose of feeding the microwave power with a different amplitude to the antenna elements (10, 12).

3. Radar sensor according to Claim 2, in which the amplitude decreases along the row of the antenna elements (10, 12) from one end to the other in stepwise fashion, preferably at equal intervals.

4. Radar sensor according to one of the preceding claims, in which for each second antenna element (12) the feed network (22') includes a phase changeover switch (30) which leaves the phase unchanged or rotates it by 180° depending on switching state.

5. Driver assistance system for motor vehicles, having a radar sensor system (36) for locating objects (42) which are located at a short longitudinal distance, but at a long lateral distance from the actual vehicle (38), **characterized in that** the radar sensor system is formed by a single radar sensor (36) according to one of Claims 1 to 4.

## Revendications

1. Capteur radar pour véhicules à moteur (38), avec une antenne émettrice (Tx) prenant la forme d'une antenne groupée planaire avec plusieurs éléments d'antenne (10, 12) disposés côte à côte et avec un réseau d'alimentation (22 ; 22') permettant d'amener une puissance de micro-onde aux éléments d'antenne, **caractérisé en ce que** le réseau d'alimentation (22 ; 22') est réalisé pour amener à chaque paire d'éléments d'antenne (10, 12) directement connexes la puissance de micro-onde de phase opposée.

2. Capteur radar selon la revendication 1, dans lequel le réseau d'alimentation (22 ; 22') est en outre réalisé pour amener aux éléments d'antenne (10, 12) la puissance de micro-onde à une amplitude différente.

3. Capteur radar selon la revendication 2, dans lequel l'amplitude diminue par paliers le long de la rangée d'éléments d'antenne (10, 12), d'une extrémité vers l'autre, de préférence à intervalles égaux.

4. Capteur radar selon l'une quelconque des revendications précédentes, dans lequel le réseau d'alimentation (22') contient tous les deux éléments d'antenne (12) un commutateur de phase (30) laissant, en fonction de l'état de commutation, la phase inchangée ou la tournant de 180°.

5. Système d'aide à la conduite pour véhicules à moteur, avec un système de capteur radar (36) servant à localiser des objets (42) se trouvant à une distance réduite dans le sens de la longueur tout en admettant des distances importantes dans le sens latéral par rapport audit véhicule à moteur (38), **caractérisé en ce que** le système de capteur radar est constitué d'un seul capteur radar (36) selon l'une quelconque des revendications 1 à 4.
